# EUROPEAN PATENT APPLICATION

(11) **EP 1 146 742 A1**
(43) Date of publication of application: **17.10.2001**
(21) Application number: 01104411.2
(22) Date of filing: 26.02.2001
(51) Int. Cl.: H04N 7/173, G11B 27/031

(54) **Integrated digital production line for visual products**

(30) Priority: 24.03.2000 US 536110
(71) Applicant: TRW Inc., Redondo Beach, California 90278 (US)
(72) Inventor: Gritzmacher, Thomas J., 90503 California (US); Siegel, Neil G., 90274 California (US); Blotky, Randolph M., 90049 California (US)
(74) Representative: Schmidt, Steffen J., Dipl.-Ing.

(57) **Abstract**

An Integrated Digital Production Line for Full-Motion Visual Products is a fully-integrated digital process which has application in many industries, including entertainment (e.g., movie, TV) and government (e.g., test range activity, intelligence). The entire process includes the phases of (1) Project Planning, (2) Content Creation, (3) Content Management, and (4) Content Distribution/ Use. Throughout, the visual content is handled in a totally secure (e.g., encrypted) manner over a virtual private network (120), wherein only those authorized to use or view the visual product can do so, and wherein there is the ability to monitor use so that the user can be charged for its use or viewing. There is also an integrated process to bill automatically the user or exhibitor for such use or viewing, and to pass the revenue to the owner of the content. According to an embodiment, a virtual private network (120) includes a network (116) for interconnecting several entities, including user equipment (310 or 312), content acquisition equipment (330), a digital hub (110), a network operations center (112) and a content exhibitor/set-top box equipment (320).

## Description

### BACKGROUND

### Field of the Invention

The invention generally relates to computers and visual products, and more particularly, to an integrated digital production line for full motion visual products.

### Discussion

The process of generating a full motion visual product (e.g., movie, television program or other video product) includes a number of activities which are presently performed piecemeal, using a time-consuming process that typically includes one or more manual phases. This process can be separated into several phases or steps including 1) project planning; 2) content creation; 3) content distribution/use; and 4) content management.

During a project planning phase the users (director, producer, script writer, and other assistants) must obtain approvals (e.g., obtain permits for location shooting a project, obtain permission from superiors to take specific actions or expend specific funds, obtain funding). The planning phase typically culminates with a go-ahead approval and funding for the project. Currently, these activities are performed piecemeal, with the user having to start from scratch for each new project using time-consuming manual processes.

Presently in the content creation phase, the acquisition of data or film shooting is performed using cameras. Typically in the current process, the film negatives are then sent physically to a film processing lab, often in Los Angeles, for development and color correction. Prints are then made so that the content can be reviewed by directors, producers, editors, etc. Additional time may be necessary to convert the film to a digitized format, add special effects, and then convert the video back to film. This process can take one or more days, during which time the set on location must typically be maintained in case re-shooting is necessary. The edited film is then shipped back to the users for further review.

In addition, systems have been tested that provide electronic techniques for sharing audio/video content with multiple users across a network, and allowing the content to be electronically edited and returned. However, such systems are usually very limited and also do not provide a fully integrated system for full-motion visual content in a total digital format, from project planning to display/exhibition (e.g., including content management and content distribution).

Currently, in a content distribution phase, hundreds or thousands of copies are made of the final version of the final visual product or film. In the current "retail" distribution process for movies, this is accomplished in the color labs where a labor-intensive process of actually watching some of the copies is performed to insure quality control. Film canisters are then distributed via truck and/or aircraft to distribution centers and again physically distributed to theaters where multiple film canisters for each film are kept near the projector, manually loaded, run, changed, and put back in the canister for the next showing.

In addition, content is presently managed to ensure that it is delivered to the user in a secure and timely manner and that the content owner is compensated for its use. In addition, the film is managed to assure that the right number of copies go to the right places, security is maintained (to prevent unlawful copying for the movie industry, and to properly handle classified information for the government applications), and usage monitored to ensure payments are made to the content owner. Presently there are very weak checks and guarantees in the current process, and piracy of images and visual products is a major problem. Physical control of the products is very difficult with so many copies provided to so many locations, and the need for materials to be handled by relatively junior employees. As a result, the present approach to generating full-motion visual products can be both very expensive and time-consuming.

Therefore, a need exists for an improved technique for generating full motion visual products which is less expensive and more efficient than techniques presently available.

### SUMMARY OF THE INVENTION

An integrated Digital production line for full motion visual products is provided. According to an embodiment, several separate processes are integrated into one secure digital process. These processes are tied or connected together via a secure, high-bandwidth, virtual-private network. The process for full motion visual products goes from initiation or planning of the project, all the way through the actual distribution and use of the content.

A virtual private network allows various users (editors, producers, director, etc.) to electronically perform many functions of the various phases of the integrated digital production line for full-motion visual products. The integrated digital production line for full motion visual products relates to the creation, management, distribution, etc. of full-motion visual content in a total digital format, typically from conceptual planning to display/exhibition. The general process involves the phases of project planning, content creation, content management, and content distribution/use. Throughout the process, the audio/video content (and all data associated with it) are readily available to those persons and systems with the appropriate access authorization through the virtual private network.

### BRIEF DESCRIPTION OF THE DRAWINGS

The foregoing and a better understanding of the present invention will become apparent from the following detailed description of exemplary embodiments and the claims when read in connection with the accompanying drawings, all forming a part of the disclosure of this invention. While the foregoing and following written and illustrated disclosure focuses on disclosing example embodiments of the invention, it should be clearly understood that the same is by way of illustration and example only and is not limited thereto. The spirit and scope of the present invention being limited only by the terms of the appended claims.

The following represents brief descriptions of the drawings, wherein:
Fig. 1 is a block diagram illustrating a secure broadband network for full-motion visual products according to an example embodiment of the present invention.
Fig. 2 is a diagram comparing the current approach with an example integrated digital implementation for generating visual products according to an example embodiment of the invention.
Fig. 3 is a block diagram illustrating a virtual private network according to an example embodiment of the invention.
Fig. 4 is a block diagram illustrating content acquisition equipment according to an example embodiment of the invention.
Fig. 5 is a block diagram of a digital hub according to an example embodiment of the invention.
Fig. 6 is a block diagram illustrating a network operations center according to an example embodiment of the invention.
Fig. 7 is a block diagram illustrating content exhibitor consumer equipment according to example embodiment of the invention.
Fig. 8 is a block diagram illustrating user equipment according to an example embodiment of the invention.
Fig. 9 is a block diagram illustrating a portion of content acquisition equipment according to another embodiment.

### DETAILED DESCRIPTION

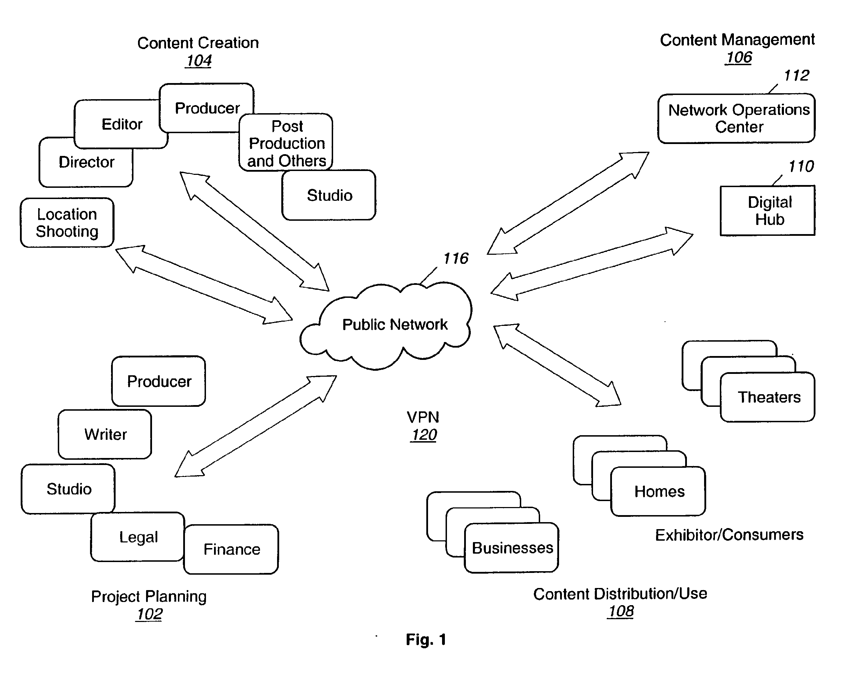

Referring to the figures in which like numerals indicate like elements, Fig. 1 is a block diagram illustrating a secure broadband network for full-motion visual products according to an example embodiment of the present invention. The example secure broadband network in Fig. 1 is implemented in an example embodiment as a virtual private network (VPN) 120 for visual products. A virtual private network (VPN) generally is a data network that makes use of the public networks and infrastructure while maintaining privacy over the VPN through the use of security procedures (e.g., encryption/decryption), tunneling procedures and the like.

The virtual private network 120 shown in Fig. 1 also generally illustrates various phases of the integrated digital production line for full-motion visual products. The integrated digital production line for full motion visual products relates to the creation, management, distribution, etc. of full-motion visual content in a total digital format, from conceptual planning to display/exhibition. The general process, depicted in Figure 1, involves the phases of project planning 102, content creation 104, content management 106, and content distribution/use 108. These phases are merely used for explanation purposes of the invention. The phases are not limited to any particular definition, but rather, many functions may fit within two or more such phases.

Referring to Fig. 1, the VPN 120 includes many users (e.g., directors, editors, producers, writers, legal and finance persons, studios) which are electronically connected together via a network, such as a public network 116 (or a private network). Network 116 may be any of a wide variety of networks or infrastructure such as one or more of public telephone lines, wireless links, the Internet, etc. Each user is electronically connected to the network 116 via a computer, such as a personal computer or other electronic apparatus (e.g., cellular phone, personal digital assistant and the like).

A digital hub 110 is also connected to network 116. The digital hub 110 typically includes one or more data servers for storing content and other information, executing or running programs. The digital hub 110 also typically includes at least one switch for routing information between users and/or other entities. Several wholesale and retail viewing locations (e.g., businesses, homes and theaters) are also connected to the digital hub 110 (with each viewing location including a computer, a server or the like for sending and receiving information over the network 116). A network operations center 112 is connected to the network 116 for managing the operation of the VPN 120. The various components shown in Fig. 1 (user's computers, servers, switches, computers at viewing locations etc.). may therefore comprise a virtual private network 120 because encrytped data may be sent between the various entities (e.g., users, viewing locations) over the public infrastructure (e.g., over public network 116). Other security techniques can also be used.

According to an embodiment, the various phases 102, 104, 106 and 108 in Fig. 1 can be performed electronically by users, for example, through a web-based interface or the like. For example, a server (or other computer) provided in the digital hub 110 may include one or more application programs that include an interface to the users, including menus and options for users to select using their computers. Thus, by using their computers to communicate with applications running on a server at the digital hub 110 or other location, users can electronically perform a variety of functions associated with the digital production line for full-motion visual products, from the project planning phase through film distribution or release.

The use of a secure broadband network (such as VPN 120, Fig. 1) to provide a fully integrated digital production line for full-motion visual products from conceptual planning to display/exhibition (e.g., including the phases of project planning 102, content creation 104, content management 106, and content distribution/use 108) may be used in a wide variety of audio/video applications. One application is the generation of movies, television programs and other audio/video products for entertainment. The various details of this application are described in detail below.

Another application is a government application at a weapons test range where the government or military is testing a weapon (e.g., a smart bomb, a new missile) at a test range. One or more cameras will typically be positioned to film the actual weapons test from several different angles (data acquisition). The film may then be provided for editing or to identify a portion of the test for review. The edited film may be distributed to a number of weapons analysts, decision makers, government personnel, etc. for further review and study. The use of a secure broadband network (such as VPN 120, Fig. 1) to provide a fully integrated digital production line for full-motion visual products can be advantageously used in both of these applications, as well as many others.

Each of the phases 102, 104, 106 and 108 will be briefly described and contrasted with a current process which is more expensive and time consuming.

During the project planning phase 102 (Fig. 1), the users (director, producer, script writer, test director, intelligence collection manager, government personnel, government decision maker for weapons contracts, etc.) have electronic access to all data necessary to accomplish activities relating to planning the project via the secure broadband network (e.g., via VPN 120). During the Project Planning phase, users will be connected via VPN 120 to a vast array of data bases at many different geographic locations. Each location on the network will have the hardware and software to connect securely to the network. For example, the users have access to data such as researching prior similar projects, reviewing organization guidelines and rules, reviewing statutory limitations, identifying and marking for subsequent review/inclusion clips from previous projects, scheduling, budgeting, and obtaining approvals (e.g., permits for location shooting a project, permission from superiors to take specific actions or expend specific funds, etc.). This data or information is stored on one or more servers at the digital hub 110 or is stored at another location and is made available to users through the digital hub 110. The planning phase typically culminates with "go-ahead" approval and funding for the project. Currently, these activities are performed piecemeal, with the user having to start from scratch for each new project using time-consuming, manual processes.

When starting a new project, users would be able to gain access to the system over a secure broadband network (e.g., VPN 120, Fig. 1) from home, office, or other location. The user may want to reuse digital scenes, as opposed to re-shooting on-location for example, and the system would show the terms for use (such as cost by the frame), identify the copyright or other legal status of a video or document so that the terms-of-use for it can be defined, verify that the user can have access to the content as defined by the content owner, verify payment ability, allow access, deliver the data over the network, bill the user, and credit the owner's account. Thus, for example, in the project planning phase 102 (Fig. 1), users can use their computers to access one or more sites (e.g., to communicate with servers at the digital hub 110) to submit requests for permits, submit requests for funding or contact potential investors to obtain funding, search digital archives of other programs for scenes to be re-used, etc.

During the Content Creation phase 104, acquisition of data occurs usually at a location distant from one's regular work premises (for example, location-shooting for a movie, or shooting video of a weapons test at a test range for a government application); it is then necessary for the results to be transmitted in a protected manner to facilities for editing and preparation for release (a movie or test report).

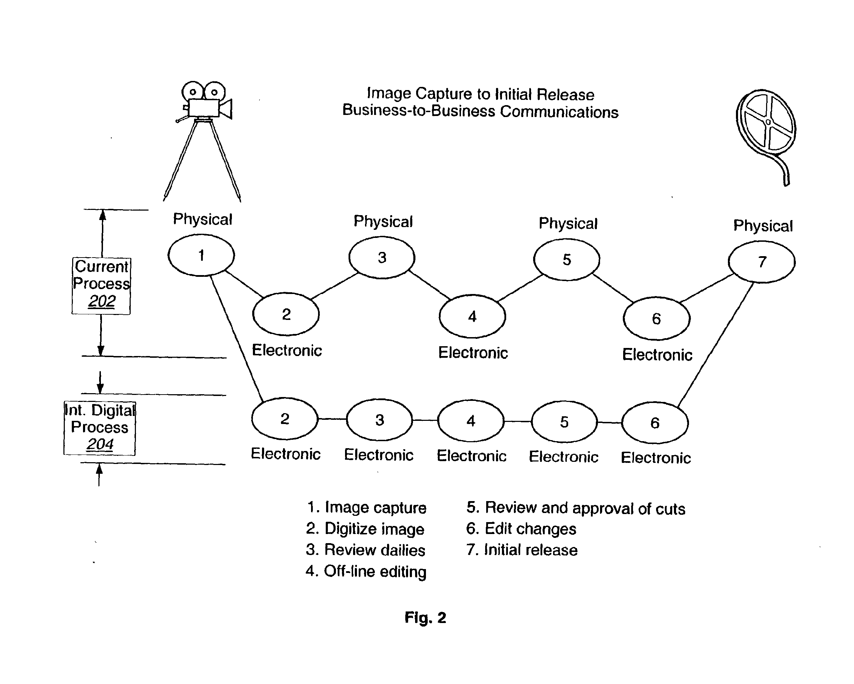

Fig. 2 is a diagram illustrating an example integrated digital implementation 204 of the invention which is contrasted with a current process 202 (widely used in the movie business today) for generating visual (or audio/video) products. As shown in Fig. 2, both processes may include seven steps (in this example). At step 1, the image (audio/video) is captured at the shooting location or test site. At step 2, the content is then digitized to create a digitized audio/video file for editing and possible inclusion of digital special effects. At step 3, the content is converted back to film for review. At step 4, off-line editing of the content is performed. At step 5, the editing or cuts are reviewed and approved. At step 6, the changes or edits are implemented to create the finished visual product. At step 7, the visual product is released. Steps 1-6 may relate to content creation 104 (Fig. 1).

In the current process 202 (Fig. 2), the various steps are typically disjointed and performed over a lengthy time period, typically requiring users to perform at least some of the steps manually or physically (as contrasted with performing these steps electronically according to an embodiment of the invention). In this example embodiment, steps 3, 5 and 7 of the current process 202 are typically performed physically or manually, rather than electronically. As described in greater detail below, the integrated digital process 204 according to an embodiment of the invention provides a more efficient and cost-effective approach by allowing each of steps 1-7 to be performed electronically using the secure broadband network (e.g., VPN 120, Fig. 1).

In the current process 202, step 1 is the acquisition of content during location shooting using film cameras. In the current process 202, the film negatives are then sent physically to a film processing lab, often in Los Angeles, for development and color correction. Prints are then made so that the content can be reviewed by directors, producers, editors, etc. This process takes one to two days, during which time the set on location must be maintained in case re-shooting is necessary, which is very expensive. When special effects are added, the film is first digitized, then sent to the special-effects facility where the digital effects are added. The resulting digital file is then sent to a facility to have it converted back to film for further review. The final copy, ready for release, would finally exist as a film, and many hundreds (often several thousands) of copies would then be made for distribution to theaters. According to an embodiment of the improved integrated digital process 204 (Fig. 2), in contrast, an electronic version can be captured in parallel with (or instead of) the film version, and sent electronically (e.g., immediately after the scene or test is complete) over VPN 120 to the editing and analysis facilities, which might be thousands of miles away.

For example, as shown in Fig. 1 for content creation 104, the film from location shooting is digitized and electronically sent to the digital hub 110 (and may be stored on a server at the hub 110). The digitized audio/video file is electronically transmitted from the digital hub 110 to the editor's computer. The editor may edit the digitized (audio and video) file by replacing a section of the video file with a clip or portion of another file, add audio or text annotations to the file, electronically add some special effects to the digitized file, insert a scene or portion of another film or digitized audio/video file, etc. The edited digitized audio/video file is then sent back to the director's computer via the digital hub 110. The director can then review the edited audio and video file, and may decide to re-shoot a portion, to use the edited file as is, etc.

The present invention allows the data or audio/video content to be digital right from acquisition (either from a digital camera or after being digitized). The present invention allows the review and approval process and time to market to be greatly improved. For example, a movie scene can be shot at a location, encoded and encrypted and then immediately electronically sent over VPN 120 to a special-effects laboratory. The special-effects laboratory (as a user of VPN 120) decrypts and decodes the received file, and then electronically adds the pre-planned special effects, re-encodes and re-encrypts the edited file and then electronically forwards the result to an editing facility. The editing facility (e.g., after decrypting and decoding the file) splices the new scene in between the scene before and the scene afterwards, encodes and then encrypts the complete result and sends the complete result back to the shooting location so that the director can review it, and to another location, so that the producer can review it. The producer and director can consult verbally and visually during this review. This process enables fully-integrated visual feedback to directors and producers within several minutes, thereby avoiding the costs associated with unnecessarily maintaining the location shoot while waiting for the current process to complete.

A final film (or visual or audio/video) product is produced typically after many iterations of shooting (e.g., data acquisition or audio/video content acquisition), editing and reviewing. After the iterative process (of content acquisition, editing, reviewing, and assembling the final product) is accomplished, the audio/video content is ready for storage and distribution to the end user, and then content management in the next phases.

In the Content Management phase, content is managed to insure it is delivered to the user in a secure and timely manner, and that the content owner is compensated for its use. This could be a "wholesale" user (e.g., another movie production business, who wants to re-use some of the scenes or images in another production), or a "retail" user (e.g., movie theater, home user, etc.). In the current "retail" distribution process for movies, hundreds of copies of the film are needed for distribution to theaters. This is typically accomplished in the "color labs", where a labor-intensive process of actually watching some percentage of the copies is done to insure quality control. In the government test range environment, the process typically involves an even more time-consuming approach, since there are usually several (often 6-12) film cameras, separated by many miles, to film the same test event from multiple aspects. Film from all of the cameras is sent to be developed and cross-correlated, so that the same exact time can be associated with all of the various film frames. It is not unusual for this process to take weeks to accomplish. With the digital system, this will be done in real time, providing much more effective testing, and it is estimated that over $100,000 could be saved for each test through the use of the an integrated digital production line implemented through a secure broadband network or the like, as provided by an embodiment of the invention.

In the current process, the physical film is processed, managed to insure that the right number of copies go to the right places, security is maintained (unlawful copying prevented for the movie industry, and classified information properly handled for the government case), and usage monitored to insure that payments are made to the content owner. There are very weak checks and guarantees in this current process, and "piracy" of images and material is a major problem; physical control is difficult with so many copies at so many locations, and the need for the material to be handled by relatively junior employees (e.g., film operators at commercial theaters). With the digital system provided by an embodiment of the invention, distribution ("retail" and "wholesale") can be accomplished via electronic transmission of a digital data file over the VPN 120 (e.g., over network 116 and hub 110 to consumers). According to an embodiment, each copy is encrypted, "watermarked" (e.g., providing a unique identifier or mark in the digitized audio/video file so that unauthorized distributions can be traced to the person or entity that "leaked" the material (e.g., distributed the material without permission), creating a powerful disincentive to "leak"). The distribution of digitized audio/video content (e.g., either transmitted over the VPN 120 or through the distribution of digital video disks or DVD disks) provides additional advantages because each digitized file is of the same quality as the original no matter how many times it is viewed (whereas with film, scratches and dust decrease the quality with each showing).

With the Integrated Digital Production Line for Full-Motion Visual Products according to an embodiment, content can be stored on servers at a digital hub 110 (Fig. 1). The visual (audio/video) product will be encrypted as it leaves the content-creation-location, sent over high speed telecommunications lines to the digital hub 110, decrypted, sent to the servers for storage and management, and distributed (after re-encryption) to "wholesale" and "retail" viewing locations over high-speed telecommunications lines. The system (e.g., application programs running on servers at the digital hub 110) will perform scheduling (e.g., automatically download a movie to the theaters or exhibitors at times when telecommunications costs are lowest), tracking of content use, which theaters are showing which content at any given time, how much the exhibitor will be charged for displaying it, how much royalty payment and who gets it for each showing, and the accumulation and crediting to the accounts of those who are to receive payment for each showing. Similar management is performed for "wholesale" usage. Billing information may be collected so that it may be used and presented at many different levels of aggregation. Billing information may be based on usage (e.g., frame-by-frame), single fee, or a defined set of fees.

Usage fees are not always pre-established for such "wholesale" uses. Users or representatives at the viewing locations (both retail and wholesale) can, for example, use computers to perform on-line or electronic bidding to negotiate and administer the financial portion of such "wholesale" use transactions with users or representatives from the content owner (e.g., to electronically negotiate the price and terms for such use or viewing of the content). This integrated management and monitoring, along with the watermarking, are just some of the many advantageous features that distinguish the capabilities of an embodiment of the invention from other proposed electronic schemes for movie distribution, which typically deal only with the notion of distributing image files containing commercial motion pictures to theaters, but do not add value to the process. In any case, content distribution / use is only one aspect of this invention, and this invention is further distinguished by its electronic integration of the distribution process into one or more of the other processes described herein.

The content can be distributed for exhibition at a theater for the entertainment industry case, and for display and manipulation in the case of the government's use for analysis and decision-making such as at a test range. In the current system 202, the film canisters are distributed via truck and aircraft to distribution centers, and then again physically distributed to theaters, where the multiple film canister for each film are kept near the projector, manually loaded, run, changed, and put back in the cannister for the next showing. The "retail" films are shown in a continuous fashion of course, while for the government application, the film might well be stopped, viewed, compared to other data, and analyzed in detail.

According to an embodiment, as described above, the digitized audio/video content can be electronically transmitted (or distributed) via the VPN 120 (Fig. 1) to users, exhibitors, theaters, consumers or others interested in receiving the content. When the content is ready for release, it will be securely transferred over VPN 120 to one or more digital hubs 110 for storage, management, and distribution. Distribution to the over 34,000 screens in the U.S. can be done over satellite, over fiber links or using other techniques, depending on which provides the most cost effective and/or efficient technique, for example. For situations where there are hundreds or thousands of users simultaneously interacting with the content such as in video-on-demand type applications to consumers at home, a stream generator (such as a TRW ATM stream generator) can be used to transmit the thousands of content streams.

An alternative way of using this invention is to use some or all of the capabilities (e.g., for some or all phases) except the actual digital transmission of the movie content. In this alternative embodiment, the distribution of the audio/video content can be accomplished via the current process of print distribution (i.e., physically distributing the films provided in film canisters).

Alternatively, the audio/video product can be distributed via DVDs or other compact digital media, which can still incorporate the encryption, watermarking, and other protection features described herein. This approach enables the connection to theaters to be accomplished via low-cost, low-speed networks (even dial-up connections could be used), while still permitting fully-automatic gathering of viewing and revenue data from each site, and still enforcing strict control of encryption keys.

To allow for content management, an electronic connection can be preferably maintained in all cases (e.g., even where there is only physical delivery of content) between applications running on servers at the digital hub 110 and computers or servers at each viewing location or exhibitor, for automatic collection of usage or billing related information, such as ticket sales and revenue for each viewing, number of viewings, date and time of viewings, etc., and other information which may be useful for billing purposes. In the case of DVD or similar digital distribution, all of the watermarking and encryption described above can still be used, and all of the data collection at the viewing site can be fully automated, as in the case for downloaded product distribution. The flexibility of different distribution methods as described above advantageously provides a mechanism for an effective "phasing in" of this process for "retail" use.

With the Integrated Digital Production Line for Full-Motion Visual Products, content can be stored at the theater on a server (whether such content arrives at the theater via download, or via digital media distribution such as DVD disk), which will be connected to a high-resolution digital projector and displayed on a large screen for example. The use of the content can be electronically monitored, as the theater owner can pay for each showing or viewing of the movie (payment may also be based on ticket sales). For example, the number of viewings, number of ticket sales, times and dates can be logged or recorded by computers or servers located at the theater or consumer. This information relating to usage can then be electronically transmitted over VPN 120 to a server located at the digital hub 110 or to a server located at the network operations center 112 (e.g., to a billing server) for preparing bills or debit notes to be sent (e.g., via regular mail, sent electronically such as by E-mail, etc.) to each theater, exhibitor or consumer.

The capability will also exist to electronically insert commercial advertising at the theater before the movie begins. The theater or exhibitor may be able to select specific commercial advertising, using the computer, to be inserted prior to the viewing or exhibition of the content or movie. For example, the theater could select advertising tailored or targeted to viewers of specific movies. Alternatively, the content owner may provide and/or specify that specific advertising should be inserted prior to specific exhibitions or movies (e.g., advertisements for other movies). The theater's computer then would insert the selected or designated advertising prior to the content exhibition (e.g., prior to the movie showing).

For the Government or test range use, viewing will more likely take place on smaller screens in conference rooms or on desktops. For this application, the end-user will interact with the system to perform analysis and show the results to decision-makers, probably interacting with the server to show different viewing angles of the same event, and overlay different types of content (radar, infrared, multi-spectral) for comparison.

Several exemplary architectures will now be briefly described for performing or implementing the various functions or phases associated with the invention.

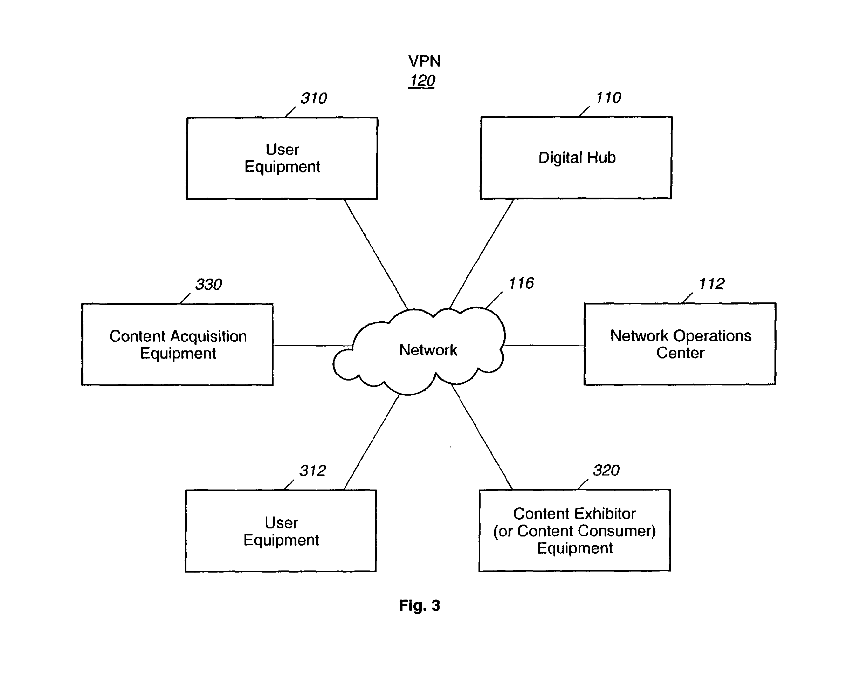

Fig. 3 is a block diagram illustrating a virtual private network according to an example embodiment of the invention. A network 116 (which may be a public network and/or a private network) is connected to several entities including a user equipment 310, a user equipment 312, a digital hub 110, and a network operations center 112. The user equipment 310 and 312 each allows users (e.g., editors, directors, producers, and other users) to access various servers located at digital hub 110 and a network operations center 112, to edit digitized audio/video segments, and perform various functions associated with the phases of the integrated digital production line for full motion visual products (e.g., phases 102-108).

As shown in Fig. 3, a content acquisition equipment 330 is connected to network 116 for acquiring the content (e.g. the audio/video content or film) and digitizing the content into a digital audio/video file. A content exhibitor equipment 320 and/or content consumer equipment is also connected to network 116 for receiving, storing, and displaying or exhibiting the audio/video content (e.g. the film or movie) to viewers (e.g. the theater or at home). Each of the systems or entities illustrated in the VPN 120 shown in Fig. 3 will now be briefly described.

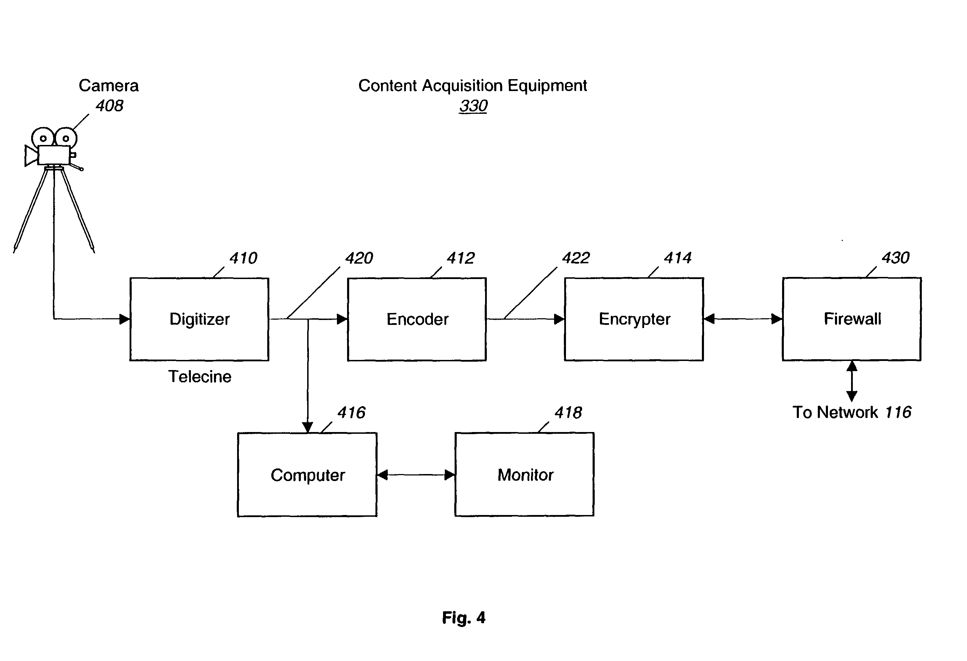

Fig. 4 is a block diagram illustrating a content acquisition equipment 330 according to an example embodiment of the invention. A camera 408 acquires the audio/video content and is typically located at a test site (for government application) or at the location shoot. The audio/video content output from camera 408 is then digitized by a digitizer 410 (a telecine device is often used), outputting a digitized audio/video file to an encoder 412 and a computer 416 via line 420. A monitor 418 is connected to computer 416 and allows a user to view or monitor the digitized audio/video content. The encoder 412 encodes the digitized audio/video file. The encoded file is provided on line 422 and is encrypted by and encrypter 414. The encrypted file may then be output through a firewall 430 via one or more types of communication links (e.g. wireless, wireline or the like) to network 116. This merely provides one example of a content acquisition equipment 330.

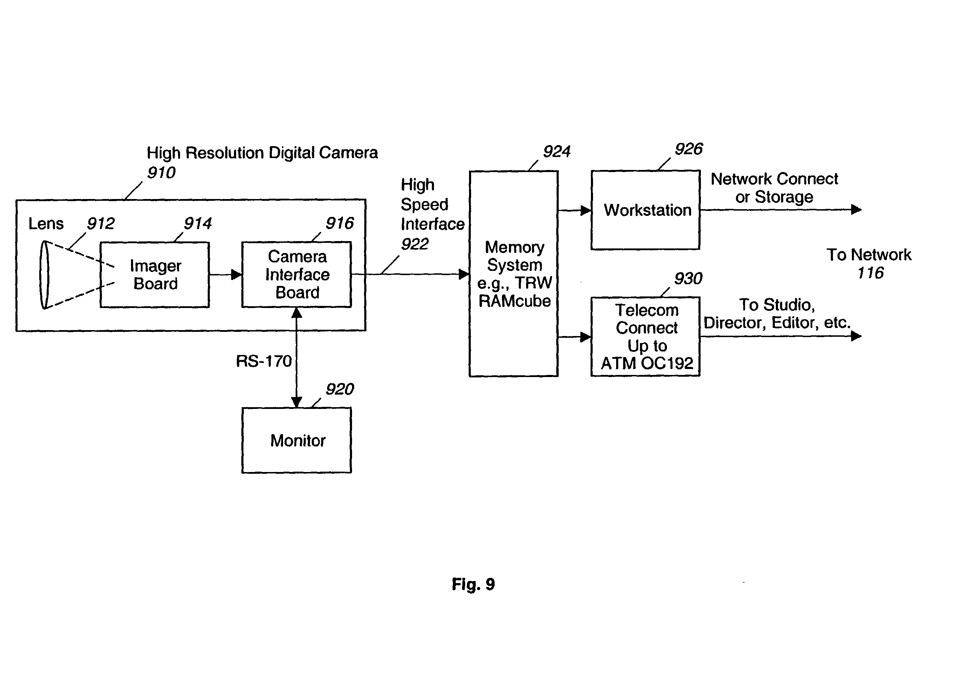

Fig. 9 is a block diagram illustrating a portion of a content acquisition equipment according to another embodiment. The content creation phase begins with the acquisition of images with a digital camera system. A typical or example configuration is depicted in Fig. 9. The example consists of a high speed digital camera 910, which includes a lens 912, an imager board 914 and a camera interface 916. The camera 910 is connected to a memory system 924 (such as a TRW Ramcube) via a high speed interface 922. The memory system 924 also connects to remote locations via a standard telecommunications interface 930 and/or a workstation or computer 926, for transferring the images (e.g., digitized audio/video content) to the studio or whatever other location is required. The resolution and frame rates can be very high, depending on user requirements. For example, a typical output data rate from the camera 910 is 1 GigaByte per second. After the scenes or digitized video content are captured in the memory system 924, the data will be encrypted and transmitted to the editor or other user over the high-speed telecommunications capability of the virtual-private network (VPN 120). This storage-and-retransmission step may be performed because the data rate needed to support the imager (approximately 1 gigabyte per second) can be much higher than the data rate supported by the virtual-private network VPN 120 (e.g., tens of megabytes per second).

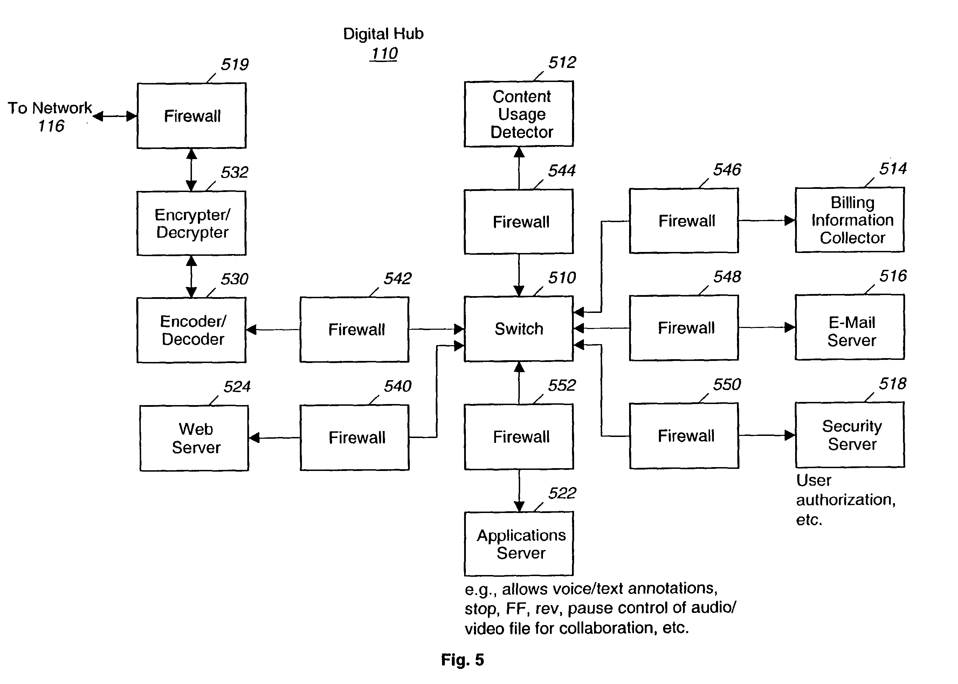

Fig. 5 is a block diagram of a digital hub 110 according to an example embodiment of the invention. Encrypted files can be received via network 116 at firewall 519, decrypted by encrypter/decrypter 532, decoded by encoder/decoder 530 and then routed to switch 510. Switch 510 routes messages, packets and other information (including digitized audio/video files) to the appropriate system or entity within digital hub 110 based on address or other identifier.

There are several entities or systems which are connected to switch 510 within digital hub 110. All are connected to switch 510 through an associated firewall (FW) 540-552. A Web Server 524 provides a Web Site including a user interface that allows users and other entities to perform functions associated with the phases of the integrated Digital production line for full motion visual products (as described above). A security server 518 insures that only authorized users have access to various features of digital hub 110. An e-mail server 516 allows various users or entities within VPN 120 to send electronic mail messages to one another. In addition, an applications server 522 runs one or more application programs. In one example embodiment, one or more digitized audio/video files may be stored on server 522. And in other embodiments, the digitized audio/video files may be stored at a server at an external site (such as at a server located at a content owner), at the network operations center 112 or some other location. The applications on server 522, for example, allows users to review and edit digitized audio/video files, to edit the files, to add voice and/or text annotations to (or within) the digitized files. The one or more application programs running on applications server 522 also allows a user to stop, fast forward, reverse, or pause the playing of the digitized audio/video file and to perform other functions associated with the phases of the integrated Digital production line for full motion visual products.

In addition, digital hub 110 also includes a content usage detector 512 (or usage probe) for detecting when audio/video content is received at switch 510 and then routed on to a content exhibitor/consumer equipment 320. Content usage detector 512 can then log or record information indicating the receipt and forwarding of a particular movie or content to a specific exhibitor or consumer and the time and date and other information which can later be used for billing. This billing or usage information can be stored, for example in a billing information collector 514, which is also connected to switch 510. Messages or digitized files received by switch 510 can be routed back to network 116 for transmission to other entities within VPN 120, and systems within digital hub 110.

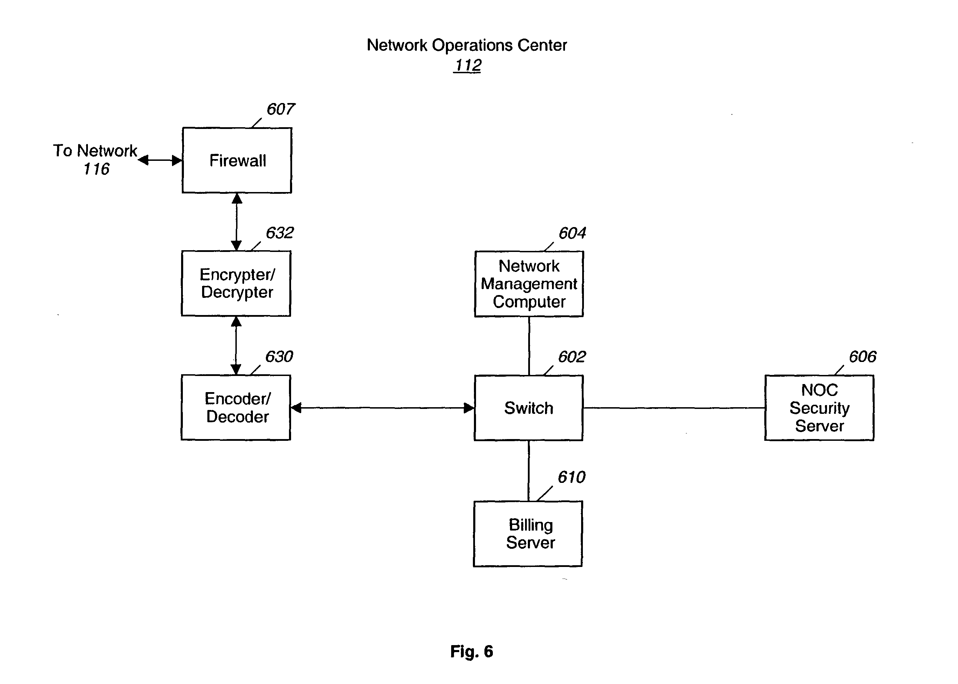

Fig. 6 is a block diagram illustrating a network operations center 112 according to an example embodiment of the invention. Network operations center 112 includes several entities or systems connected to a switch 602. Digitized files can be received at firewall 607, decrypted by the encrypter/decrypter 632 and decoded by encoder/decoder 630 and provided to switch 602. A network management computer 604 is provided to allow management of various aspects of or operations within VPN 120. A network operations center security server 606 ensures that only authorized users have access to VPN 120 and may perform other security related functions. A billing server 610 is also connected to switch 602 and receives content usage and other billing information from digital hub 110. Billing server 610 may then automatically electronically generate bills based on various usage or billing information received.

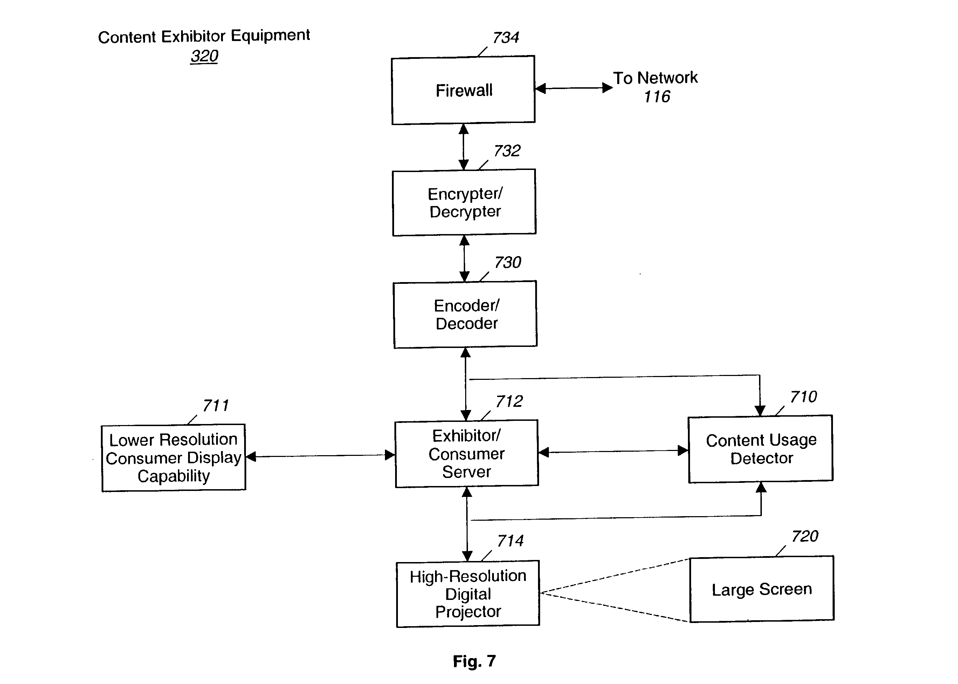

Fig. 7 is a block diagram illustrating a content exhibitor/consumer equipment 320 according to an example embodiment of the invention. A firewall 734 is connected to a network 116 while encryptor/decryptor 732 and encoder/decoder 730 are also provided. An exhibitor/consumer server 712 is provided for receiving, displaying and storing digitized audio/video content (e.g. digitized movies or other programs). At the exhibitor (e.g., theater), the audio/video content is output from server 712 to a high-resolution digital projector 714, for example. Projector 714 then projects or outputs the audio/video content onto a large screen, or other display. For the consumer case, the server is often referred to as a set top box and may have a lower resolution display capability 711. A content usage detector 710 may be connected to server 712 and/or 711 and/or digital projector 714. Detector 710 may detect the receipt and storage of a particular audio/video content (e.g., a particular digitized movie) and log its identification along with the time and date that it was received. Detector 710 may also receive and record or log information identifying the number of the viewings of the content, the number of tickets sold and/or revenue for ticket sales for each viewing, and date and time of each viewing. This usage or billing information may then be transmitted to a billing server 610 via network 116. As noted above, billing server 610 (within network operations center 112) may use billing information or content usage information received from content usage detector 710 and/or detector 512 and billing information collector 514 (Fig. 5), for example, to electronically generate and send bills or debit notes to exhibitors, consumers or other users of the content. For example, billing server 610 may generate a bill based on the usage or billing information, identify an address of the exhibitor (e.g., an e-mail address or a postal address) and then can automatically send the bill to the exhibitor or consumer.

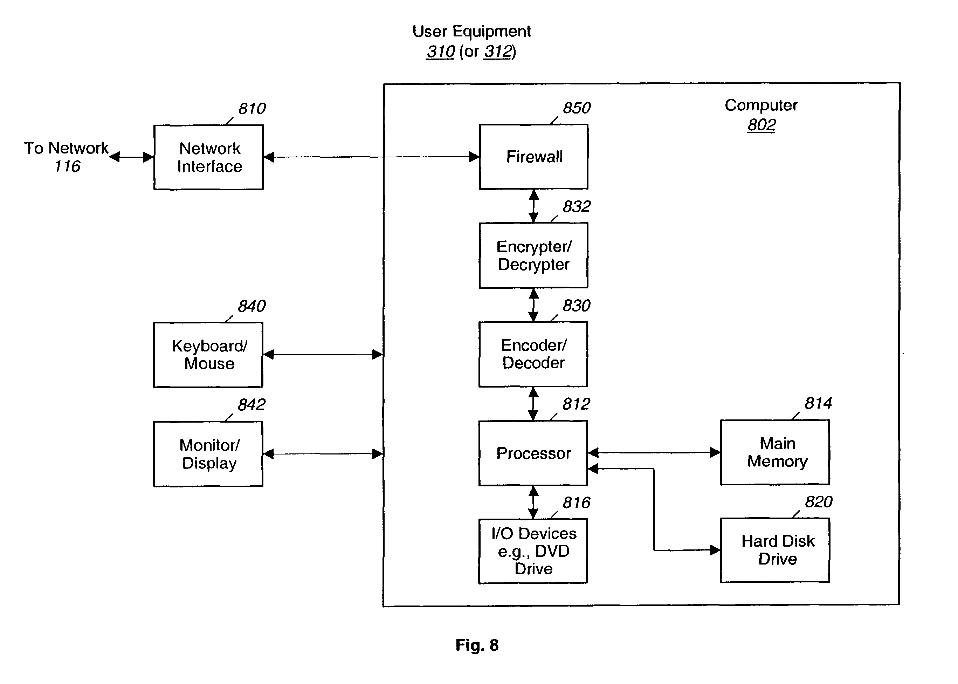

Fig. 8 is a block diagram illustrating a user equipment (310 or 312) according to an example embodiment of the invention. The user equipment may include, for example, a network interface 810, computer 802, a keyboard and/or mouse 840 and a monitor or display 842 for displaying video content and other information. A firewall 850 may also be provided to ensure that only authorized users operating user equipment 310 or 312 may access VPN 120 via network 116. An encrypter/decrypter 832 and an encoder/decoder 830 are also provided within computer 802 as either hardware or software or a combination thereof. Computer 802 includes a number of components typically found within computers or personal computers, including a processor 812, a main memory 814, a hard disk drive 820 and one or more input/output (I/O) devices such as a DVD drive. The user equipment 310 and/or 312 allows users to perform functions associated with the various phases of the integrated Digital production line for full motion visual products (including phases 102,104,106 and 108) as described above.

The example applications or uses of the VPN 120 are File Transfer, Digital Dailies and Collaboration. These applications are particularly targeted for the content creation phase of the process according to example embodiments.

File transfer allows a digitized audio/video file (or other file) to be electronically and securely transferred across VPN 120. This file transfer may occur with or without making a copy of the file at an intermediate location (such as a server at the digital hub 110). Product control is improved and the possibility for unauthorized dissemination is reduced where no intermediate copy of the file is made. The File Transfer application provides the capability to transfer securely digital files from one computer to another over VPN 120 such as from the special effects house to the editor for inclusion in the scenes from location shooting, for . example.

Digital Dailies provides the capability for the production team (director, editor, producer, and studio) to view and comment on the day's shooting, or on a set of audio/video segments acquired that day or over a selected period of time. This application provides the capability for the users to view the audio/video segments (e.g., of each day's shooting), make voice, text, and drawing comments or annotations on a frame by frame basis and have those comments available to others on the team immediately via their secure connection to the network. This application allows a user to receive a copy of a digitized audio/video segment, perform edits and make text and/or audio or voice annotations to the file, and then retransmit the edited and annotated file changes back to a server located at the digital hub 110, for example. A second user (often times remotely located from the first user) can then subsequently receive or download the edited and annotated audio/video segment from the digital hub server for review and analysis.

The Collaboration application involves real time streaming of encrypted audio/video content from one user to another via the switch 510 (of hub 110) and/or network 116. This allows two(or more) users (e.g., an editor and a producer) to simultaneously view the same content at the same time and collaborate (stop on a certain frame, converse, replay, forward, reverse, etc.) while they are in geographically separate locations. Through the content management capability of this invention, many additional types of data can be joined to the basic full-motion visual product - out-takes, alternative versions, discussion, annotations of many sorts, reference and background material, etc.

Several embodiments of the present invention are specifically illustrated and/or described herein. However, it will be appreciated that modifications and variations of the present invention are covered by the above teachings and within the purview of the appended claims without departing from the spirit and intended scope of the invention. For example, while the present invention has been described with reference to a network, the various aspects of the present invention are applicable to a wide variety of networks, including system area networks, storage area networks, Local Area Networks (LANs), Wide Area Networks (WANs), the Internet, etc.

## Claims

1. An integrated digital production line for full motion visual products comprising:
a content acquisition equipment coupled to a network to acquire visual content;
a hub coupled to the network including a hub switch and one or more servers, the one or more servers to run one or more application programs to allow users to electronically receive, transmit and edit visual content;
a user equipment coupled to the network to allow users to electronically receive, transmit and edit visual content;
a content exhibitor/consumer equipment coupled to the network to electronically transmit information, receive the visual content and to display the visual content;
a detector coupled to the network for obtaining content usage information and other billing related information; and
a billing server coupled to the network to receive the content usage information and the other billing related information and to generate bills based thereon.

2. The integrated digital production line of claim 1 wherein the content acquisition equipment comprises:
a camera to obtain the visual content;
a digitizer to digitize the visual content;
an encoder to encode the digitized visual content; and
an encrypter coupled to the encoder to encrypt the encoded digitized content.

3. The integrated digital production line of claim 1 wherein the hub comprises:
a hub switch;
a network server coupled to the hub switch for providing a network interface for users to electronically perform functions related to the content;
a security server coupled to the hub switch;
a content usage detector coupled to the hub switch to detect the transmission or delivery of visual content via the hub switch to different exhibitors or consumers;
a billing information collector coupled to the hub switch to log or record billing information based on a detection of a transmission or delivery of visual content via the hub switch to different exhibitors or consumers; and
an applications server to allow users to review and edit visual content and to modify the displayed content based on user inputs.

4. The integrated digital production line of claim 3 wherein the applications server comprises an applications server to allow users to review and edit visual content, to make annotations to visual content and to allow users to collaborate with other users while reviewing a same visual content.

5. The integrated digital production line of claim 1 wherein the content exhibitor/consumer equipment comprises:
an exhibitor server/set top box to electronically receive, display and store visual content; and
a projector coupled to the exhibitor server to display visual content.

6. The integrated digital production line of claim 5 wherein the content exhibitor/consumer equipment further comprises a detector coupled to the server/set top box to detect the receipt and/or storage of visual content in the exhibitor server.

7. The integrated digital production line of claim 5 wherein the content exhibitor/consumer equipment further comprises a detector coupled to the server/set-top box to detect the display of visual content and user inputs so as to modify the displayed content based on user input.

8. The integrated digital production line of claim 1 wherein the detector is coupled to the hub switch in the hub to detect receipt and/or transmission of visual content to one or more exhibitors/consumers or destinations.

9. An integrated process of creating and managing visual content over a network comprising:
acquiring digitized visual content;
transmitting the digitized content over the network to a server;
storing the content on the server;
a first user editing the content and storing the edited content on the server;
a second user, remotely located from the first user, reviewing the edited content;
electronically distributing a copy of the content via the network to one or more exhibitors or consumers; and
electronically collecting billing information over the network relating to the distribution of the content to an exhibitor and/or the use or display of the content by an exhibitor.

10. An integrated process of creating and managing visual content over a network comprising:
one or more users electronically performing one or more functions associated with a project planning phase for visual content over the network;
acquiring digitized visual content;
transmitting the digitized content over the network to a server;
storing the content on the server;
a first user editing the content and storing the edited content on the server;
a second user, remotely located from the first user, reviewing the edited content;
distributing a copy of the content via the network to one or more exhibitors or consumers; and
electronically collecting billing information over the network relating to use or display of the content by an exhibitor or consumer.

11. The process of claim 10 wherein distributing a copy comprises physically distributing a copy of the content to an exhibitor or consumer.

12. The process of claim 10 comprising direct collaborating between at least two users via real-time streaming of visual content.
